# EUROPEAN PATENT SPECIFICATION

(11) **EP 2 634 103 B1**
(45) Date of publication and mention of the grant of the patent: **28.12.2016**
(21) Application number: 13154255.7
(22) Date of filing: 06.02.2013
(51) Int. Cl.: B65C 1/02, B65C 9/28

(54) **Glass sheet labeling system.**
Vorrichtung zum Etikettieren von Glasscheiben
Dispositif d'étiquetage de feuilles de verre

(30) Priority: 01.03.2012 IT MI20120318
(43) Date of publication of application: 04.09.2013
(73) Proprietor: Macotec S.R.L., 23010 Rogolo, (SO) (IT)
(72) Inventor: Colli, Maurizio, 23010 Rogolo SO (IT)
(74) Representative: Ciceri, Fabio

(56) References cited:
- EP-A1- 0 460 281
- WO-A1-03/080449
- WO-A1-2004/113242
- DE-C1- 19 606 199
- FR-A1- 2 391 171
- JP-A- 10 139 459

## Description

The present invention relates to a glass sheet labeling system, particularly for flat glass sheets as defined in the preamble of claim 1.

The application of labels to glass sheets has become increasingly indispensable for classification of cut-to-size sheets. Particularly an adhesive identification label is applied to one of the surfaces of the sheet cuts, which is usually located at a corner of the sheet.

Various glass sheet labeling systems are known in the art.

In the most common system, labeling is performed manually by qualified operators of glass sheet cutting equipment.

Another system uses a label printer and an associated applicator, both integrally mounted to the cutting unit of a typical sheet cutting apparatus. The applicator is equipped with a pad that is adapted to receive the printed labels and later contact the sheet surface to apply the labels.

Nevertheless, the above mentioned prior art systems suffer from certain drawbacks.

The application of labels by qualified personnel is apparently rather slow, inaccurate and unreliable, as it is subject to human error.

On the other hand, the system equipped with the printer and the applicator is very heavy and bulky and its movement places an overload on the cutting unit and the mechanical members. This arrangement would affect the performance of the apparatus and increase the risk of failure to the moving parts, thereby causing losses in terms of manufacturing costs.

Document JP 10 139459 describes a system for labelling glass sheets having the features of precharacterizing portion of the claim 1.

As a result of the above, the need arises for a glass sheet labeling systems that does not jeopardize normal cutting operations while maintaining a high operating speed, that allows easy installation and also has low maintenance requirements.

Therefore, the object of the present invention is to provide a glass sheet labeling apparatus that has such structural and functional features as to fulfill the above needs, while obviating the above mentioned drawbacks of prior art.

The above object is fulfilled by a glass sheet labeling system as defined in claim 1.

Further characteristics and advantages of the glass sheet labeling system and method of the present invention will be apparent from the following description of preferred embodiments thereof, which are given by way of illustration and without limitation with reference to the accompanying figures, in which:
- Figure 1 is a top view of the labeling system according to a first embodiment of the invention;
- Figure 2 is a side view of the system of Figure 1;
- Figure 3 is a detailed side view of the applicator and the printer of the invention;
- Figure 4 is a side view of the labeling system according to a second embodiment of the invention;
- Figures 5a, 5b and 5c are views of the steps of the method of labeling glass sheets according to the first embodiment of the invention;
- Figures 6a, 6b, 6c, 6d, 6e and 6f are top views of the steps of the method of labeling glass sheets according to the second embodiment of the invention.

Referring to the accompanying figures, numeral 1 generally designates a glass sheet labeling system of the present invention.

The labeling system is designed for labeling preferably flat glass sheets 5.

It shall be noted that the labeling system 1 is obtained from a cutting apparatus 100 for glass sheets 5.

For this purpose, the apparatus 100 has a frame 10 and a support base 11 for supporting at least one glass sheet 5. In the particular example as described herein, the support base 11 defines a supporting table on which the sheet 5 is directly laid. For this purpose, the support base 11 mainly extends in a longitudinal direction X-X.

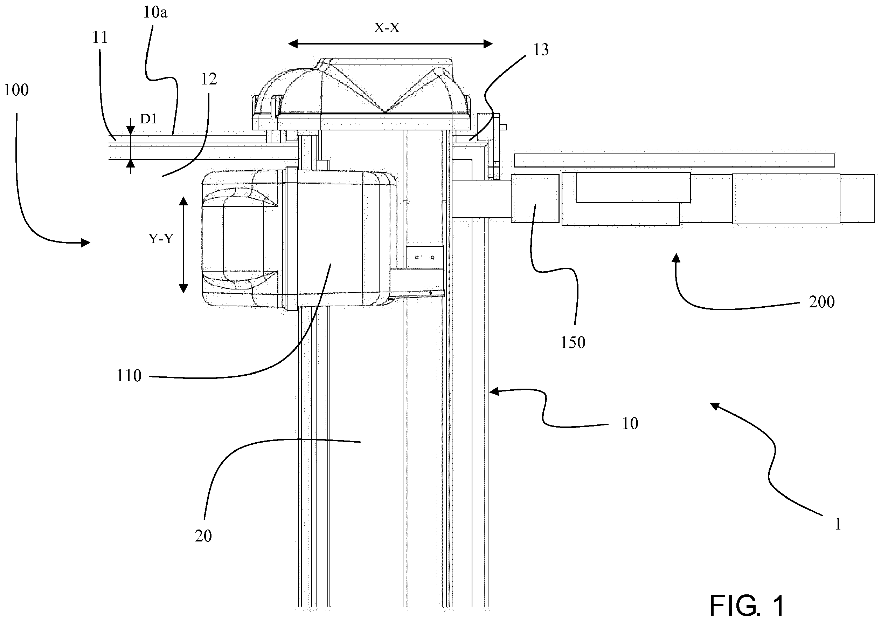

As shown in Figure 1, the support base 11 is defined by a front side, a rear side and opposed lateral sides, the latter extending in the longitudinal direction X-X.

Referring to the apparatus 100, the latter comprises a cutting unit 110 for cutting glass sheets 5, which is slidingly coupled to the frame 10.

The cutting unit 110 has a cutting head 120 that performs the steps of cutting and separating of the glass sheets 5.

For this purpose, a cutting element 122 for cutting the glass sheets 5 extends from the cutting head 120 that faces the support base 11.

Concerning the frame 19, the support base 11 defines a work surface 12 on which the glass sheets 5 are processed.

As shown in the example of Figure 1, the work surface 12 is defined by a front edge, a rear edge and opposed lateral edges, the latter extending in the longitudinal direction X-X.

In one embodiment, the work surface 12 has a smaller area than the support base 11. For instance, the front edge, the rear edge and the opposed lateral edges of the work surfaces 12 are at a distance D1 ranging from 10 mm o to 100 mm from the front side, the rear side and the opposes lateral sides of the support base 11. Preferably, the distance D1 is 40 mm.

According to a first embodiment as shown in the examples of Figures 1 to 3 and 5a to 5c, the cutting unit 110 slides over a bridge 20 in a direction Y-Y transverse to said longitudinal direction X-X.

Furthermore, the frame 10 may be equipped with guides 13 mounted at the lateral sides 10a, 10b of the frame 10 and extending parallel thereto. Thus, the bridge 20 can be coupled to the frame 10 to be able to slide in the longitudinal direction X-X.

The cutting head 120 may slide in a vertical direction Z-Z with respect to said longitudinal direction X-X through appropriate guide means (not shown) placed on the bridge 20 in a manner known per se.

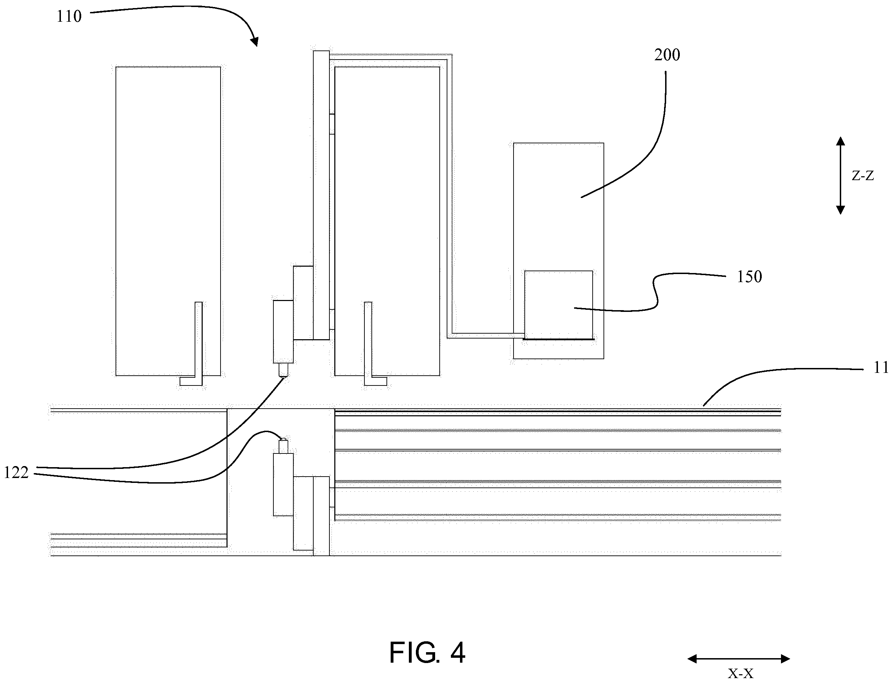

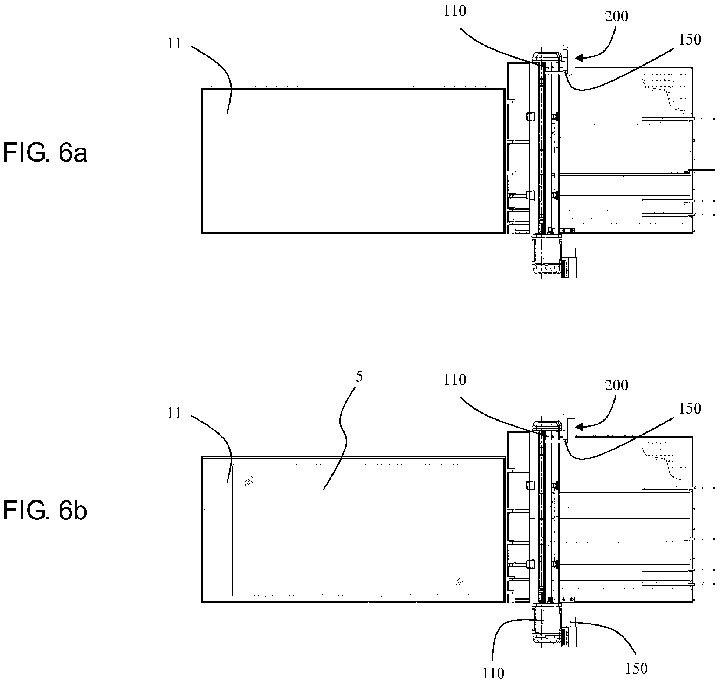

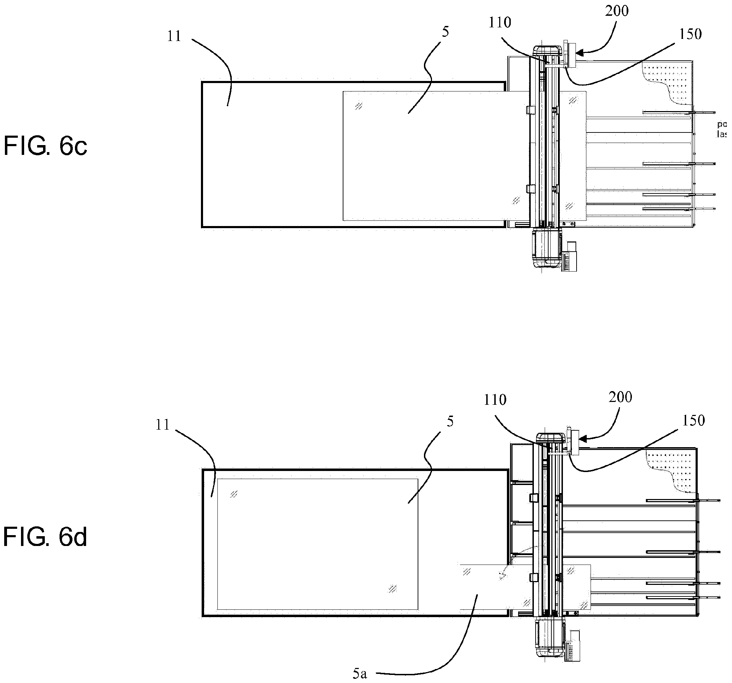

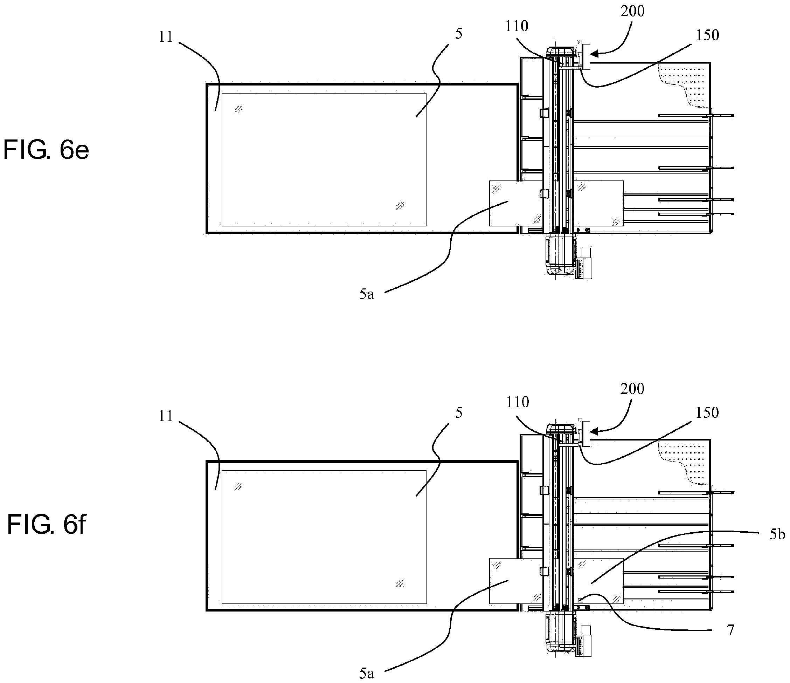

According to a second embodiment as shown in the examples of Figures 4 and 6a to 6f, the cutting unit 110 only slides over the bridge 20 in the transverse direction Y-Y. Like in the first embodiment, the cutting head 120 may slide in the vertical direction Z-Z.

Advantageously, the system 1 of the invention comprises a feeder 200 for feeding the labels 7 to be applied to the sheets 5.

It shall be noted that the feeder 200 is of the type that is adapted to use a continuous tape 5 supported on appropriate rolls (not shown).

The continuous tape 6 has one side 6a adapted to removably receive and support a plurality of labels 7, the latter preferably having one adhesive side 7a. The second side, opposite to the first side 7a is adapted for printing of graphics and/or text.

As shown in the examples of Figures 1 to 3, the feeder 200 may comprise a print head 210 for printing the graphics and/or text on the second side of the labels 7. For this purpose, the print head 210 defines a pad (not shown) having a surface facing the support base 11.

The feeder 200 also comprises feed means 220, for feeding the continuous tape 6 and the labels 7 with it, along a feeding path P1 toward an outfeed opening 209 of the feeder 200.

In one embodiment, the feeding path P1 of the tape 6 is oriented in the longitudinal direction X-X, such that the tape 6 is substantially horizontal and parallel to the support base 11.

Namely, the feeder 200 has belt-carrying means 201 which are adapted to receive the continuous tape 6 wound on a roll 206. The provision of at least one return pulley 205 allows the tape 6 to be guided by the tape-carrying means 201 toward the outfeed opening 209.

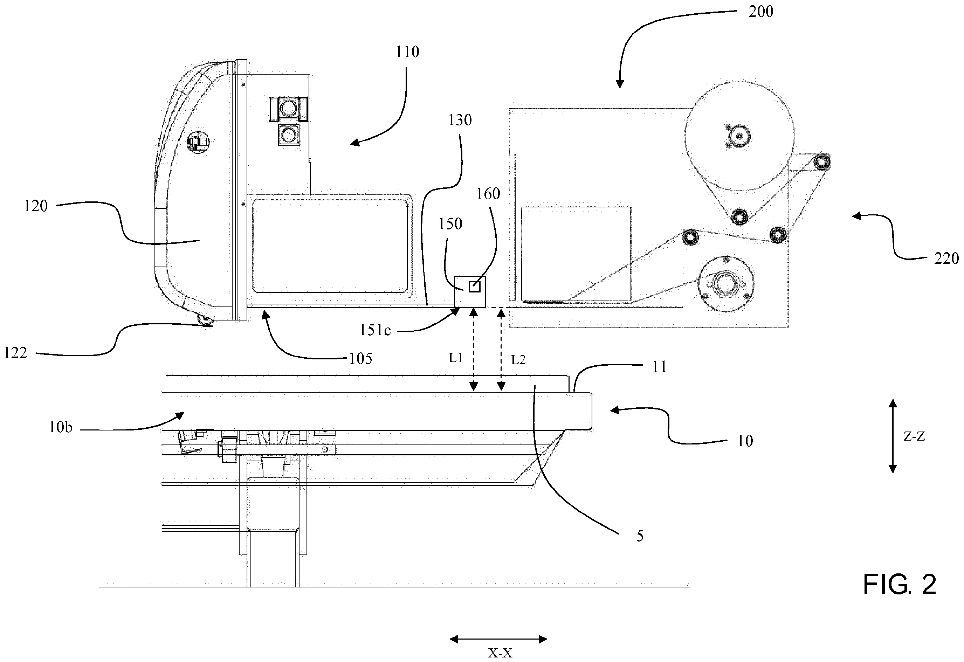

As shown in the example of figure 2, the print head 210 is disposed between the tape-carrying means 201 and the outfeed opening 209.

In one aspect of the invention, the feeder 200 comprises a wedge element (not shown) disposed substantially at the outfeed opening 209 downstream from the print head 210 and designed for automatic peeling of the labels 7 from the continuous tape 6.

In one embodiment, the feeder 200 may comprise a plate 208 for supporting the tape-carrying means 201, the return pulley 205, the wedge element and the print head 210.

In a further embodiment, the print head 210 is closed by a casing 211. In this case, the outfeed opening 209 may be directly formed on the casing 211 of the print head 210. The outfeed opening 209 is defined, for instance, by a slot formed on the casing 211 of the print head 210 for the outfeed of the labels 7 that have been peeled off the tape 6. This opening 211 mainly extends in the longitudinal direction X-X and has a length substantially equal to the width of the continuous tape 6.

Once the label 7 has been peeled off the tape 6, the latter runs along a return path P2 toward the tape recovery means 202 in a manner known per se.

For label application, the system 1 of the invention comprises an applicator 150 for applying labels to at least one glass sheet 5 laid on the support base 11.

The applicator 150 is mounted on board the cutting unit 110 and cooperates with the feeder 200. Particularly, the applicator 150 is integrally connected to the cutting unit 110 to be moved from and toward the feeder 200.

Thus, the labels 7 that come out of the feeder 200 are received by the applicator 150 and later applied to the glass sheets 5 as explained below.

First, it shall be noted that, as the cutting unit 110 is moved above the support base 11, the applicator 150 may be brought close to the feeder 200 to receive the labels 7.

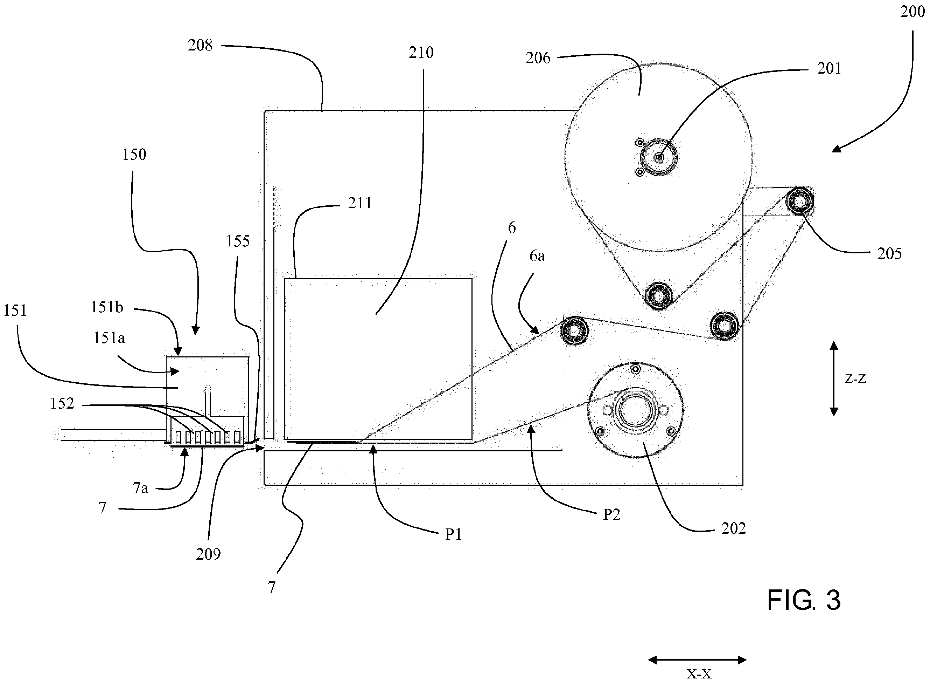

For this purpose, as shown in the example of Figures 2 and 3, the applicator 150 has a body 151 whose volume is delimited by its lateral 151a, upper 151b and lower 151c surfaces. The lower surface 151c defines the application surface that faces the support base 11 and is designed to support the labels 7 coming out of the outfeed opening 209 of the feeder 200.

In one embodiment, the lower surface 151c has a lead-in ramp 155 for facilitating the transfer of labels from the feeder 200 to the applicator 150. For instance, the lead-in ramp 155 may involve the presence of an upwardly curved extension of the lower surface 151c facing the feeder 200.

Preferably, the body 151 defines a cube whose volume does not exceed 1000 and has an overall weight of about 0.5 kg.

In one embodiment, the applicator 150 is connected to the cutting unit 110 via a horizontal support bar 130. The support bar 130 allows the applicator 150 to be spaced from the cutting unit 110 and, as shown in the example of Figure 2, is located below the bridge 20. Alternatively, as shown in the example of Figure 4, the support bar 130 may be located above the bridge 20.

Here, the applicator 150 may be located, for instance, at a distance of 20 cm to 60 cm from the cutting element 122. Preferably such distance, in the longitudinal direction X-X, is 40 cm.

The application surface 151c is oriented substantially parallel to the support plane 11 and has a plurality of through openings 152 orthogonal to the direction of extension of the application surface 151c.

As shown in the example of Figure 3, the apparatus 100 comprises pneumatic retention/release means 160 for retaining/releasing the labels 7, which are associated with the applicator 150. Particularly, the pneumatic retaining/release means 160 are designed to suck and eject air from the through openings 152 of the applicator 150 to retain or release the labels 7 that come out of the feeder 200. For this purpose, the through openings 152 are in fluid communication with said pneumatic retention/release means 160.

In practice, a negative pressure (or vacuum) may be created between a label 7 and the application surface 151c, due to the presence of the pneumatic retention/release means 160, such that the label 7 may be retained by the applicator 150.

The pneumatic retention/release means 160 further allow an air flow to be ejected from the through openings 152 such that the labels 7 are violently shot toward the sheet 5 for effective application thereof to the surface of the sheet 5.

In order to retain and release the labels 7, the pneumatic retention/release means 160 may include fans and/or air compressor means respectively (not shown).

Preferably, the pneumatic retention/release means 160 are mounted on board the applicator 150.

Referring to the example as shown in Figure 2, the feeder 200 is associated with the frame 10. For instance, the feeder 200 may be supported by the frame 10.

Advantageously, the feeder 200 is placed at least partially around the support base 11.

In a first case, the projection of the feeder 200 on an axis parallel to the longitudinal direction X-X partially overlies the projection of the support base 11 on such axis. In this case, the feeder 200 is placed in a configuration that at least partially overlies the support base 11.

Likewise, the projection of the feeder 200 on an axis parallel to the longitudinal direction X-X partially overlies the projection between the support base 11 and the work surface 12 on such axis.

In a second case, the projection of the feeder 200 on an axis parallel to the longitudinal direction X-X totally overlies the projection of the support base 11 on such axis. In this case, the feeder 200 is placed above the support base 11, preferably at its peripheral edge.

In a third case, the projection of the feeder 200 on an axis parallel to the longitudinal direction X-X does not overlie the projection of the support base 11 on such axis. In this case, the feeder 200 is placed around the support base 11.

As shown in the example of Figure 2, the applicator 150 is placed at a height L1 of 40 mm to 100 mm from the support base 11. Particularly, L1 defines the distance between the application surface 151c of the applicator and the work surface 12 of the support base 11 supporting the sheets 5. Preferably, L1 is 59.9 mm.

In order that the labels may be transferred from the feeder 200 to the applicator 150, the feeder 200 is placed at a height L2 of 40 mm to 100 mm from the support base 11. Particularly L2 defines the distance between the outfeed opening 209 and the work surface 12 of the support base 11. Preferably, L2 is 60 mm.

As a result of the above, the height L1 of the applicator 150 differs from the height L2 of the feeder 200 by about 1 mm. Particularly, the height L1 is smaller than the height L2.

It shall be noted that both heights L1 and L2 are measured in vertical directions Z-Z, perpendicular to said longitudinal direction X-X.

It shall be noted that the outfeed opening 209 preferably extends in the longitudinal direction X-X between a lower limit and an upper limit. Therefore, L2 defines the distance between the lower limit of the outfeed opening 209 and the support base 11.

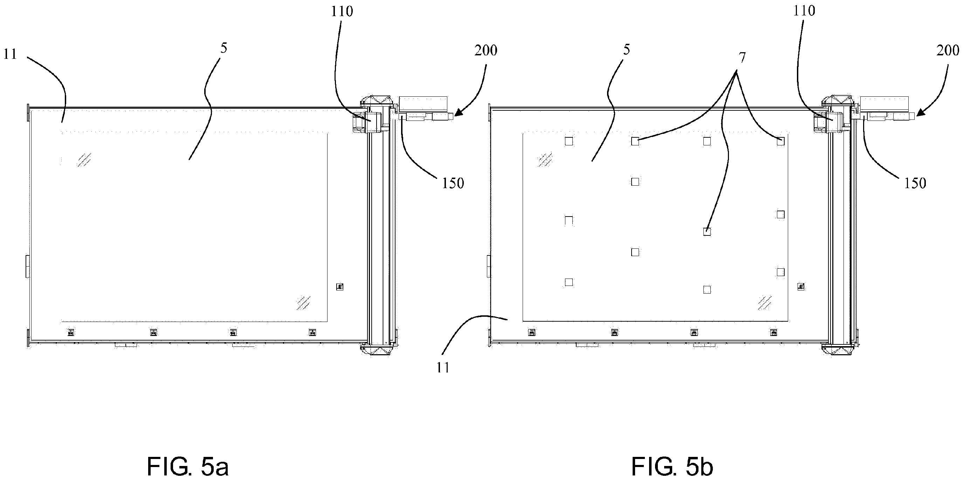

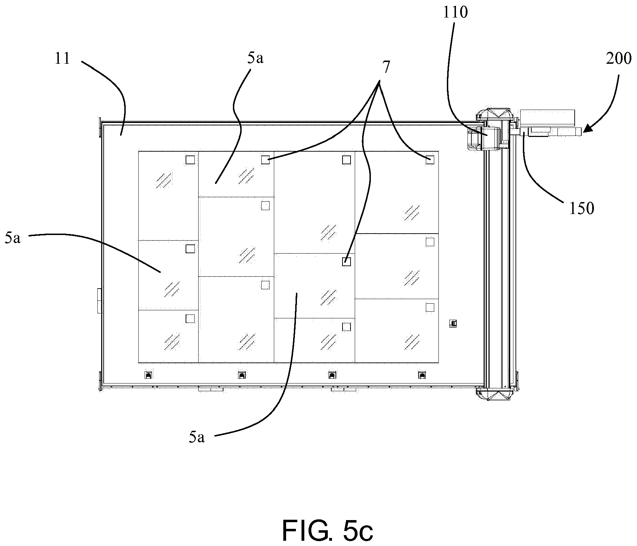

Referring to the first embodiment, as shown in the examples of Figures 5a to 5c, the labels 7 may be applied to a glass sheet 5 (e.g. a monolithic glass sheet), supported on a support base 11, by the steps of:
a) feeding at least one label 7 by the feeder 200,
b) moving the cutting unit 110 toward the feeder 200,
c) receiving at least one label 7 from the feeder 200,
d) moving the cutting unit 110 above the support base 11 to position the applicator 150 above the sheet 5,
e) shooting the label 7 toward the sheet 5,
f) repeating the steps a) to e) as many times as there are labels to be applied;
g) cutting the sheet 5 using the cutting unit 110 along predetermined cutting lines, to obtain a plurality of cut and labeled sheets 5a.

Preferably, the above steps a) to f) are carried out in chronological order.

In one embodiment, the step e) is carried out "on the run", i.e. during the movement of the cutting unit 110.

In a further embodiment, the steps d) and e) may be carried out at the same time.

Referring now to the second embodiment, as shown in the examples of Figures 6a to 6f, the labels 7 may be applied to a glass sheet 5 (e.g. a laminated glass sheet), supported on a support base 11, by the steps of:
a) feeding at least one label 7 by the feeder 200,
b) moving the cutting unit 110 in the transverse direction Y-Y to cut the sheet 6 along a predetermined cutting line, to obtain a first sheet 5a,
c) rotating the cut sheet 5a,
d) moving the cutting unit 110 in the transverse direction Y-Y to cut the first sheet 5a along a predetermined cutting line, to obtain a second sheet 5b,
e) shooting the label 7 toward the sheet 5,
f) repeating the steps a) to e) as many times as there are labels to be applied.

Preferably, the above steps a) to f) are carried out in chronological order.

In one embodiment, the step e) is carried out "on the run", i.e. during the movement of the cutting unit 110.

In a further embodiment, the steps d) and e) may be carried out at the same time.

It shall be noted that, due to the above disclosed features, the applicator 150 of the present invention can apply the labels 7 without directly contacting the sheets 7, thereby actually preventing any damage to the sheets.

The labels 7 are applied without stopping the movement of the cutting unit 110. In practice, the labels are applied during movement of the cutting unit 110 ("on the run").

Also, with this arrangement, the applicator 150 may be maintained at a fixed height from the support base 11, which will eliminate one degree of movement (the vertical movement) of the applicator and increase the overall reliability of the labeling system.

As clearly shown in the above description, the labeling system of the present invention fulfills the needs and obviates the drawbacks of the prior art as set out in the introduction of this disclosure. One of the surprising advantages achieved by the Applicant is that the applicator is separated from the printer, whereby fast and reliable cooperation therebetween is obtained. Furthermore, by having the applicator mounted on board the cutting unit, labeling may be performed during normal cutting operation, thereby minimizing cutting head positioning times. For instance, the labels might be effectively applied to the sheets during displacements of the cutting head.

It shall be further noted that the present invention is also applicable to apparatus for cutting monolithic, laminated and/or low-emissivity glass sheets. In the latter, one of the two surfaces is treated by application of an insulating film, which usually faces toward the cutting unit. Since any type of contact with the surface should be prevented, the label must be applied to the opposite surface, i.e. the one facing toward the support base. Therefore, in one embodiment of the invention, the applicator may be supported by the cutting unit below the support base.

Obviously, the embodiments and examples as disclosed and illustrated herein shall be only intended by way of example, and those skilled in the art will appreciate that a number of changes and variants may be made to the system of the invention as described hereinbefore, including for instance a combination of said embodiments and examples to meet specific needs, without departure from the scope of the invention, as defined in the following claims.

## Claims

1. A system (1) for labeling glass sheets (5), comprising:
- an apparatus (100) for cutting glass sheets (5) having:
- a frame (10) and a support base (11) mainly extending in a longitudinal direction (X-X) for supporting at least one glass sheet (5),
- a cutting unit (110) for cutting said at least one glass sheet (5), which unit is slidingly coupled to said frame (10),
- a feeder (200) for feeding labels (7), and associated with said frame (10),
- an applicator (150) for applying said labels (7) to said glass sheets (5) and mounted to said cutting unit (110), to cooperate with said feeder (200),
- said feeder (200) being separated from said applicator (150) and placed at least partially around the support base (11),
- said applicator (150) having an application surface (151c) designed to support said labels (7) as they come out from an outfeed opening (209),
- said application surface (151c) having a plurality of apertures (152) in fluid communication with pneumatic retention/release means (160) which are designed to suck and eject air from said through openings (152) to retain and release said labels (7),
**characterized in that** said applicator (150) and said application surface (151c) are placed at a fixed height (L1) from said support base (11) such that said labels (7) are applied to said sheet (5) without directly contacting it; and **in that** said pneumatic retention/release means (160) are designed to allow an air flow to be ejected from said plurality of apertures (152) such that said labels (7) are violently shot toward said sheet (5) for effective application thereof to the surface of the sheet (5) so as said labels (7) being applied without stopping the movement of said cutting unit (110).

2. A system (1) as claimed in claim 1, wherein said applicator (150) is integrally connected to said cutting unit (110) to be moved from and toward said feeder (200).

3. A system (1) as claimed in any of claims 1 and 2, wherein said feeder (200) comprises feeding means (220) for feeding said labels (7) along a feeding path (P1) toward an outfeed opening (209) of the feeder (200).

4. A system (1) as claimed in any of claims from 1 to 3, wherein said applicator (150) is placed at said fixed height (L1) from said support base (11), which ranges from 40 mm to 100 mm, said height (L1) being measured in a vertical direction (Z-Z) perpendicular to said longitudinal direction (X-X).

5. A system (1) as claimed in claim 4, wherein said feeder (200) is placed at a height (L2) from the support base (11), that is greater than said height (L1).

6. A system (1) as claimed in any of claims from 1 to 5, wherein said cutting unit (110) is slidingly coupled to said support base (11) in said longitudinal direction (X-X) and/or in direction (Y-Y) transverse to said longitudinal direction (X-X).

7. A system (1) as claimed in any of claims from 1 to 6, wherein said applicator (150) is slidingly mounted to said cutting unit (110).

8. A system (1) as claimed in any of claims from 1 to 6, wherein said applicator (150) is integrally connected to a cutting head (120).

## Patentansprüche

1. System (1) zum Etikettieren von Glasscheiben (5), umfassend:
- eine Vorrichtung (100) zum Schneiden von Glasscheiben (5) mit:
- einem Rahmen (10) und einem Stützboden (11), der sich hauptsächlich in Längsrichtung (X-X) erstreckt, um wenigstens eine Glasscheibe (5) abzustützen,
- einer Schneidanlage (110) zum Schneiden der wenigstens einen Glasscheibe (5), welche Schneidanlage verschiebbar mit dem Rahmen (10) gekoppelt ist,
- einer Zuführungsvorrichtung (200) zum Zuführen von Etiketten (7), die mit dem Rahmen (10) verbunden ist,
- einem Applikator (150) zum Applizieren der Etiketten (7) auf die Glasscheibe (5), der auf der Schneidanlage (110) eingebaut ist, um mit der Zuführungsvorrichtung (200) zusammenzuarbeiten,
- wobei die Zuführungsvorrichtung (200) von dem Applikator (150) getrennt und wenigstens teilweise um den Stützboden herum (11) angeordnet ist,
- wobei der Applikator 150) eine Applikationsfläche (151c) aufweist, die dazu ausgestaltet ist, die Etiketten (7) so, wie sie aus der Ausführöffnung (209) herauskommen, zu stützen,
- wobei die Applikationsfläche (151c) mehrere Öffnungen (152) in fluidischer Verbindung mit pneumatischen Halte-/Freigabemitteln (160) aufweist, die dazu ausgestaltet sind, Luft durch die durchgehenden Öffnungen (152) anzusaugen und auszustoßen, um die Etiketten (7) zu halten bzw. freizugeben, **dadurch gekennzeichnet, dass** der Applikator (150) und die Applikationsfläche (151c) auf einer festen Höhe (L1) von dem Stützboden (11) angeordnet sind, derart, dass die Etiketten (7) auf der Scheibe (5) appliziert werden, ohne sie direkt zu berühren;
sowie dadurch, dass die pneumatischen Halte-/Freigabemittel (160) dazu ausgestaltet sind, das Ausstoßen eines Luftstroms aus den mehreren Öffnungen (152) zu erlauben, derart, dass die Etiketten (7) zum wirkungsvollen Applizieren derselben auf der Scheibe (5) heftig gegen die Scheibe (5) geschossen werden, so dass die Etiketten (7) appliziert werden, ohne die Bewegung der Schneidanlage (110) zu unterbrechen.

2. System (1) nach Anspruch 1, wobei der Applikator (150) einstückig mit der Schneidanlage (110) verbunden ist, um zu der Zuführungsvorrichtung (200) hin und von ihr weg bewegt zu werden.

3. System (1) nach einem beliebigen der Ansprüche 1 und 2, wobei die Zuführungsvorrichtung (200) Zuführmittel (220) zum Zuführen der Etiketten (7) längs einer Zuführstrecke (P1) zu einer Ausführöffnung (209) der Zuführungsvorrichtung (200) umfasst.

4. System (1) nach einem beliebigen der Ansprüche 1 bis 3, wobei der Applikator (150) auf der festen Höhe (L1) von dem Stützboden (11) angeordnet ist, welche zwischen 40 mm 100 mm liegt, wobei die Höhe (L1) in vertikale Richtung (Z-Z) senkrecht zur Längsrichtung (X-X) gemessen wird.

5. System (1) nach Anspruch 4, wobei die Zuführungsvorrichtung (200) auf einer Höhe (L2) von dem Stützboden (11) angeordnet ist, die größer als die Höhe (L1) ist.

6. System (1) nach einem beliebigen der Ansprüche 1 bis 5, wobei die Schneidanlage (110) mit dem Stützboden (11) in Längsrichtung (X-X) und/oder in Richtung (Y-Y) verschiebbar gekoppelt ist, die quer zur Längsrichtung (X-X) liegt.

7. System (1) nach einem beliebigen der Ansprüche 1 bis 6, wobei der Applikator (150) in der Schneidanlage (110) verschiebbar eingebaut ist.

8. System (1) nach einem beliebigen der Ansprüche 1 bis 6, wobei der Applikator (150) einstückig mit einem Schneidkopf (120) verbunden ist.

## Revendications

1. Système (1) pour l'étiquetage de feuilles de verre (5), comprenant :
- un appareil (100) pour découper des feuilles de verre (5) comprenant :
- un châssis (10) et une base de support (11) s'étendant principalement dans une direction longitudinale (X-X) pour supporter au moins une feuille de verre (5),
- une unité de coupe (110) pour découper ladite au moins une feuille de verre (5), laquelle unité est couplée de manière coulissante audit châssis (10),
- un distributeur (200) pour distribuer des étiquettes (7), et associé audit châssis (10),
- un applicateur (150) pour appliquer lesdites étiquettes (7) sur lesdites feuilles de verre (5) et monté sur ladite unité de coupe (110), pour coopérer avec ledit distributeur (200),
- ledit distributeur (200) étant séparé dudit applicateur (150) et placé au moins partiellement autour de la base de support (11),
- ledit applicateur (150) ayant une surface d'application (151c) conçue pour supporter lesdites étiquettes (7) lorsqu'elles sortent d'une ouverture d'évacuation (209),
- ladite surface d'application (151c) comportant une pluralité d'ouvertures (152) en communication de fluide avec des moyens pneumatiques de retenue/libération (160) qui sont conçus pour aspirer et éjecter de l'air à partir desdites ouvertures traversantes (152) pour retenir et libérer lesdites étiquettes (7),
**caractérisé en ce que** ledit applicateur (150) et ladite surface d'application (151 c) sont placés à une hauteur fixe (L1) par rapport à ladite base de support (11) de manière que lesdites étiquettes (7) soient appliquées sur ladite feuille (5) sans être directement en contact avec elle ;
et **en ce que** lesdits moyens pneumatiques de retenue/libération (160) sont conçus pour permettre d'éjecter une décharge d'air à partir de ladite pluralité d'apertures (152) de manière que lesdites étiquettes (7) soient violemment tirées vers ladite feuille (5) pour une application efficace de celles-ci sur la surface de la feuille (5) de manière que lesdites étiquettes (7) soient appliquées sans interrompre le mouvement de ladite unité de coupe (110).

2. Système (1) selon la revendication 1, dans lequel ledit applicateur (150) est connecté solidairement à ladite unité de coupe (110) pour être déplacé par rapport audit et vers ledit distributeur (200).

3. Système (1) selon l'une quelconque des revendications 1 et 2, dans lequel ledit distributeur (200) comprend des moyens d'alimentation (220) pour alimenter lesdites étiquettes (7) le long d'un trajet d'alimentation (P1) vers une ouverture d'évacuation (209) du distributeur (200).

4. Système (1) selon l'une quelconque des revendications 1 à 3, dans lequel ledit applicateur (150) est placé à ladite hauteur fixe (L1) par rapport à ladite base de support (11), qui est dans la plage de 40 mm à 100 mm, ladite hauteur (L1) étant mesurée dans une direction verticale (Z-Z) perpendiculaire à ladite direction longitudinale (X-X).

5. Système (1) selon la revendication 4, dans lequel ledit distributeur (200) est placé à une hauteur (L2) par rapport à la base de support (11), qui est plus grande que ladite hauteur (L1).

6. Système (1) selon l'une quelconque des revendications 1 à 5, dans lequel ladite unité de coupe (110) est couplée de manière coulissante à ladite base de support (11) dans ladite direction longitudinale (X-X) et/ou dans une direction (Y-Y) transversale à ladite direction longitudinale (X-X).

7. Système (1) selon l'une quelconque des revendications 1 à 6, dans lequel ledit applicateur (150) est monté de manière coulissante sur ladite unité de coupe (110).

8. Système (1) selon l'une quelconque des revendications 1 à 6, dans lequel ledit applicateur (150) est connecté solidairement à une tête de coupe (120).
